# FASCICULE DE BREVET EUROPEEN

(11) **EP 1 800 949 B1**
(45) Date de publication et mention de la délivrance du brevet: **14.09.2011**
(21) Numéro de dépôt: 06291950.1
(22) Date de dépôt: 15.12.2006
(51) Int. Cl.: B60Q 1/26

(54) **Bloc de feu de véhicule automobile équipé d'une tige comportant un tronçon de positionnement et un tronçon de fixation sur un élément de carrosserie**
Signalleuchteneinheit für ein Kraftfahrzeug mit einer Stange, welche mit einem Positionierungsteil und einem Teil zur Befestigung an der Karosserie versehen ist.
Light unit for a vehicle provided with a rod having a positioning portion and a portion for fixing it to the car body

(30) Priorité: 20.12.2005 FR 0512981
(43) Date de publication de la demande: 27.06.2007
(73) Titulaire: VALEO VISION, 93012 Bobigny Cedex (FR)
(72) Inventeur: Lelarge, Olivier, 89100 Gron (FR)

(56) Documents cités:
- EP-A2- 0 582 449
- DE-U1- 20 213 362
- FR-A1- 2 810 378
- GB-A- 2 364 346
- US-A- 4 137 959
- US-A- 4 186 645
- US-A1- 2001 046 135
- PATENT ABSTRACTS OF JAPAN vol. 1998, no. 05, 30 avril 1998 (1998-04-30) -& JP 10 000981 A (ICHIKOH IND LTD), 6 janvier 1998 (1998-01-06)

## Description

L'invention concerne un bloc de feu, notamment de véhicule automobile, qui est destiné à être positionné puis fixé de manière étanche sur la carrosserie du véhicule.

US 4,186,645 décrit un bloc de feu de l'Art Antérieur positionné également de manière étanche sur une carrosserie.

L'invention concerne plus particulièrement un bloc de feu, notamment de véhicule automobile, qui est destiné à être fermé de manière étanche par la face externe d'un élément de carrosserie, et qui comporte :
- au moins un pion axial de positionnement sur l'élément de carrosserie qui est porté par une face de support du bloc de feu et qui est destiné à être reçu axialement dans un orifice de référence de l'élément de carrosserie ;
- au moins une tige axiale qui comporte un tronçon d'extrémité libre de fixation sur l'élément de carrosserie, qui est portée par la face de support du bloc de feu, et qui est destinée être reçue axialement dans un orifice de fixation de l'élément de carrosserie ;
- au moins un joint annulaire d'étanchéité qui est agencé de manière à être comprimé entre la face externe de l'élément de carrosserie et une face en vis-à-vis du bloc de feu, en entourant la tige et le pion de positionnement.

Les blocs de feu sont montés sur un élément de carrosserie de la caisse du véhicule automobile par une première opération de positionnement, puis par une deuxième opération de fixation.

Les blocs de feu sont positionnés sur la caisse du véhicule avec une légère tolérance géométrique par rapport aux pièces de carrosserie.

Néanmoins, pour obtenir les effets de style des véhicules actuels qui comportent des optiques à affleurement des pièces de carrosserie, il est souhaitable de pouvoir positionner les blocs de feu de manière très précise par rapport à la caisse du véhicule.

De manière connue, le positionnement des blocs de feu est réalisé par des pions de positionnement tandis que la fixation est réalisée par des tiges de fixations distinctes. Les pions sont reçus dans des orifices de référence de l'élément de carrosserie tandis que les tiges de fixation sont reçues dans des orifices de fixation de l'élément de carrosserie.

Le bloc de feu comportant des équipements électriques pour l'alimentation des lampes, il est nécessaire que le bloc de feu soit fermé de manière étanche par la face externe de l'élément de carrosserie sur lequel il est fixé. Pour éviter que du liquide tel que de l'eau pénètre dans le bloc de feu par l'intermédiaire des orifices de fixation et de référence, il est nécessaire d'étanchéifier les orifices de fixation et les orifices de référence.

A cet effet, il est connu d'agencer un joint annulaire d'étanchéité autour de chaque pion et autour de chaque tige de fixation de manière que, lorsque le bloc est fixé sur la carrosserie, chaque joint d'étanchéité soit comprimé entre le bloc de feu et une face externe de la carrosserie, autour de l'orifice associé.

Cependant, après la fixation du bloc de feu sur l'élément de carrosserie, les joints d'étanchéité ne sont pas tous comprimés de la même façon. Les joints qui sont associés aux tiges de fixation sont davantage comprimés que les joints qui sont associés aux pions de positionnement. En effet, les pions n'étant pas serrés axialement contre la carrosserie, les joints d'étanchéités associés sont susceptibles de pousser localement selon une direction axiale le bloc de feu de manière à l'écarter de l'élément de carrosserie, provoquant ainsi un basculement de l'ensemble ou d'une partie du bloc de feu.

Pour résoudre ce problème, il est connu d'agencer chaque pion à proximité d'une tige de fixation et d'entourer avec un unique joint d'étanchéité associé chaque paire formée par un pion et une tige de fixation.

Cependant, cet agencement est contraignant car il implique de réserver des zones suffisamment grandes pour contenir une tige de fixation et un pion de positionnement.

De plus, cet agencement est onéreux car il nécessite un joint de grande longueur, de taille et de forme non standard.

Pour remédier à ces inconvénients, l'invention propose un bloc de feu tel que définit dans la revendication 1.

Selon d'autres caractéristiques de l'invention :
- le tronçon de fixation et le tronçon de positionnement sont réalisés venus de matière en une seule pièce ;
- le tronçon de fixation comporte un filetage qui est destiné à recevoir un écrou de serrage contre une face interne de l'élément de carrosserie ;
- le diamètre du tronçon de positionnement est supérieur au diamètre du tronçon de fixation ;
- l'extrémité libre du tronçon de fixation comporte une tête de fixation qui est destinée à être emboîtée élastiquement dans un logement de forme complémentaire porté par l'élément de carrosserie ;
- la longueur axiale du tronçon de positionnement est supérieure à l'épaisseur de l'élément de carrosserie ;
- l'écrou de serrage comporte un lamage qui est destiné à loger la portion du tronçon de positionnement qui fait saillie par rapport à la face interne de l'élément carrosserie ;
- la paroi du tronçon de positionnement est lisse ;
- la tige comporte une collerette qui s'étend radialement depuis la base du tronçon de positionnement qui est apte à venir en butée axiale contre la face externe de l'élément de carrosserie autour de l'orifice de référence ;
- la tige comporte une embase de fixation sur la face de support du bloc de feu, l'embase comportant une face radiale annulaire coaxiale sur laquelle est fixé le joint d'étanchéité ;
- l'embase de fixation sur la face de support le bloc de feu est réalisée en un matériau plastique ;
- l'embase de fixation est soudée sur la face de support du bloc de feu ;
- la tige est réalisée en un matériau métallique, l'embase de fixation étant réalisé par surmoulage sur la tige ;
- la tige est réalisée en un matériau plastique qui est formé venu de matière avec l'embase de fixation ;
- le bloc de feu comporte trois tiges comportant un tronçon de fixation et un tronçon de positionnement, un joint d'étanchéité étant associé à chaque tige.

D'autres caractéristiques et avantages apparaîtront au cours de la lecture de la description détaillée qui va suivre pour la compréhension de laquelle on se reportera aux dessins annexés, parmi lesquels :
- la figure 1 est une vue en perspective éclatée qui représente schématiquement un élément de carrosserie arrière d'un véhicule automobile et un bloc feu qui est destiné à être positionné et fixé sur l'élément de carrosserie ;
- la figure 2 est une vue en opposition par rapport à celle de la figure 1 qui représente l'intérieur du bloc de feu de la figure 1 qui est réalisé selon les enseignements de l'invention ;
- la figure 3 est une vue de détail à plus grande échelle qui représente une tige de positionnement et fixation du bloc de feu sur l'élément de carrosserie ;
- la figure 4 est une vue en coupe axiale qui représenté la tige de la figure 3 en position fixée sur l'élément de carrosserie ;
- la figure 5 est une vue similaire à celle de la figure 4 qui représente une variante de réalisation de l'invention.

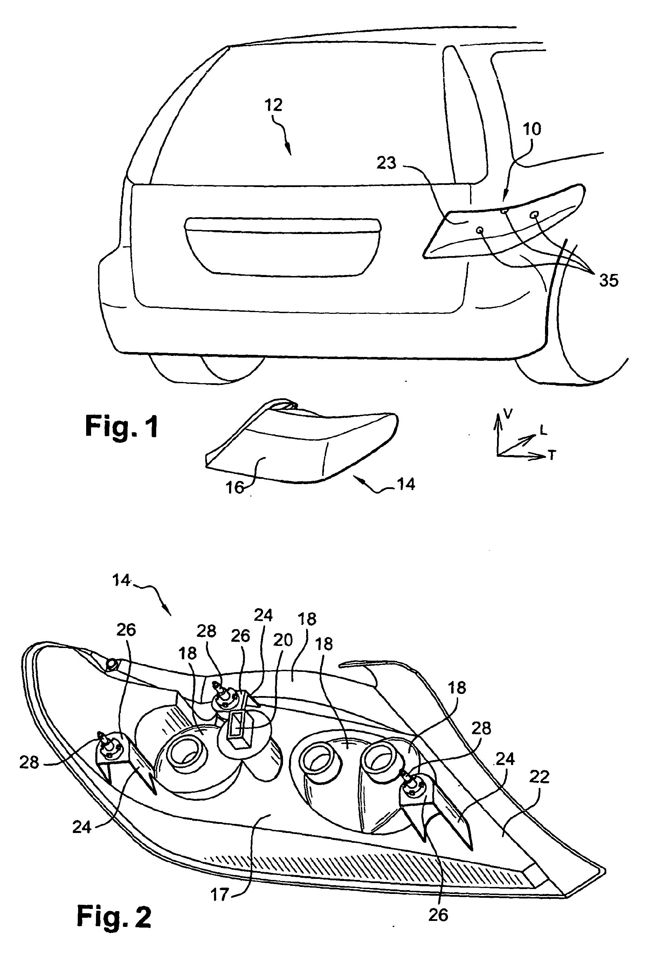

Pour la suite de la description, on adoptera à titre non limitatif une orientation longitudinale, verticale et transversale indiquée par le trièdre L,V,T des figures 1 et 2.

Par la suite, des éléments identiques, analogues ou similaires seront désignés par des mêmes numéros de référence.

On a représenté à la figure 1 un élément de carrosserie 10 d'un véhicule automobile 12. II s'agit ici d'un élément de carrosserie 10 arrière du véhicule 12.

L'élément de carrosserie 10 est conformé en un logement qui est destiné à recevoir un bloc de feu 14 de forme complémentaire par une première opération de positionnement du bloc de feu 14, puis par une deuxième opération de fixation du bloc de feu 14.

L'élément de carrosserie 10 est ici réalisé en une tôle de faible épaisseur qui comporte une face arrière 23 tournée vers l'extérieur du véhicule 12, qui sera appelée par la suite face externe 23, et une face avant 25 tournée vers l'intérieur du véhicule 12, qui sera appelée par la suite face interne 25.

Comme représenté à la figure 2, le bloc de feu 14 comporte un bâti 17 en forme de coque globalement verticale transversal qui cloisonne l'intérieur du bloc de feu 14 en une chambre avant et une chambre arrière.

Des réflecteurs 18 sont enchâssés dans la face arrière de du bâti 17. Chaque réflecteur 18 est apte à recevoir une source lumineuse (non représentée) qui est alimentée par un connecteur électrique 20. Le connecteur électrique 20 est porté par la face avant 21 du bâti 17 de manière à être logé dans la chambre avant du bloc de feu 14.

La chambre arrière du bloc de feu 14 est fermée de manière étanche vers l'arrière par une vitre 16. La chambre avant du bloc de feu 14 est destinée à être fermée vers l'avant par la face externe arrière 23 globalement verticale transversale de l'élément de carrosserie 10.

Le pourtour du bâti 17 est destiné à être en contact linéaire continu avec l'élément de carrosserie 10 pour fermer la chambre avant du bloc de feu 14. Le bâti 17 se trouve alors enfermé à l'intérieur du bloc de feu 14.

Etant donné que le bloc de feu 14 abrite un connecteur électrique 20, le bloc de feu 14 doit être fermé, notamment vers l'arrière, de manière étanche. A cet effet, le bloc de feu 14 comporte un joint d'étanchéité 22 qui épouse le pourtour du bâti 17 bloc de feu 14.

Le bloc de feu 14 comporte aussi des entretoises 24 qui s'étendent longitudinalement vers l'avant depuis la paroi verticale avant du bâti 17 jusqu'à proximité de la face externe 23 de l'élément de carrosserie 10, lorsque le bloc de feu 14 est monté contre l'élément de carrosserie 10. Les entretoises 24 traversent ainsi longitudinalement la chambre avant qui est délimitée vers l'avant par l'élément de carrosserie 10.

Les entretoises 24 sont ici au nombre de trois, et elles ne sont pas alignées, formant ainsi les sommets d'un triangle. Les deux entretoises 24 représentées en bas à la figure 2 sont alignées transversalement.

Chaque entretoise 24 comporte une face d'extrémité avant libre 26 qui est agencé à distance en vis-à-vis de la face externe 23 de l'élément de carrosserie 10. La face d'extrémité avant 26 de chaque entretoise 24 porte des moyens 28 de positionnement et de fixation du bloc de feu 14 sur l'élément de carrosserie 10. Ces faces d'extrémité avant 26 seront par la suite appelées faces de support 26.

Dans l'exemple représenté aux figures, les portions de face externe 23 de l'élément de carrosserie 10 qui sont en regard des entretoises 24 s'étendent dans un plan vertical transversal. Les entretoises 24 ont des longueurs telles que les trois faces de support 26 sont agencées dans un même plan vertical transversal qui est décalé vers l'arrière par rapport à la face externe 23 de l'élément de carrosserie 10.

Selon une variante non représentée de l'invention, les faces de support 26 sont parallèles entre elles, mais elles ne sont pas coplanaires.

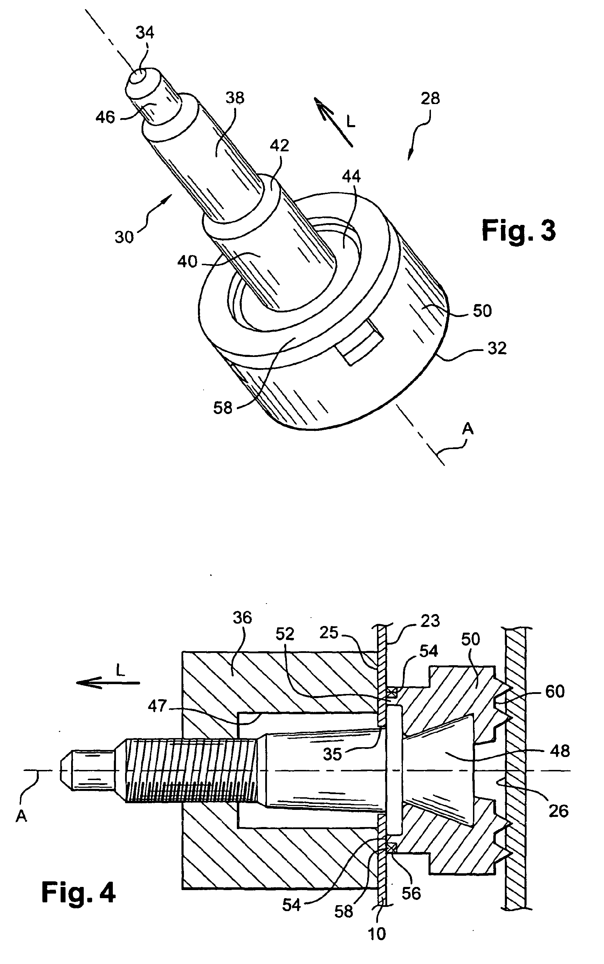

Les moyens 28 de positionnement et de fixation du bloc de feu 14 sur l'élément de carrosserie 10 sont représentés plus en détail à la figure 3. On décrira par la suite les moyens 28 associés à une seule entretoise 24. Cette description est applicable aux moyens 28 associés aux deux autres entretoises.

Les moyens 28 comportent une tige 30 d'axe longitudinale "A" qui s'étend axialement depuis une extrémité arrière 32 qui est fixée sur la face de support 26 jusqu'à une extrémité avant libre 34. La tige 30 est destinée à être reçue dans un orifice de référence 35 associé de l'élément de carrosserie 10.

La tige 30 comporte un tronçon d'extrémité avant 38 de fixation et elle est fixée dans une embase d'extrémité arrière 50 de fixation sur la face de support 26 de l'entretoise 24 associée. La tige 30 comporte aussi un tronçon intermédiaire 40 de positionnement.

La paroi cylindrique du tronçon de fixation 38 comporte ici un filetage qui est apte à recevoir un écrou de serrage 36, comme illustré à la figure 4.

Le tronçon de positionnement 40 a une forme globalement cylindrique, de préférence légèrement tronconique convergeant vers l'avant comme illustré à la figure 4. La paroi tronconique du tronçon de positionnement 40 est lisse.

Le diamètre du tronçon de positionnement 40 est supérieur à celui du tronçon de fixation 38. La tige 30 comporte ainsi une face d'épaulement 42 qui délimite axialement le tronçon de fixation 38 et le tronçon de positionnement 40.

Avantageusement, la face d'épaulement 42 est ici inclinée de manière à former un tronc de cône qui converge vers l'avant.

La tige 30 comporte aussi une collerette arrière 44 qui s'étend radialement en saillie depuis la base arrière du tronçon de positionnement 40. La collerette 44 comporte notamment une face annulaire avant qui est destinée à venir en butée contre la face externe 23 de l'élément de carrosserie 10 lors de l'opération de fixation du bloc de feu 14.

La longueur axiale du tronçon de positionnement 40 est supérieure à l'épaisseur de l'élément de carrosserie 10, de manière que, lorsque la tige 30 est inséré dans l'orifice de référence 35 de l'élément de carrosserie 10, le tronçon de positionnement 40 fasse saillie axialement vers l'avant par rapport à la face interne 25 de l'élément de carrosserie 10.

De manière non limitative, l'extrémité avant du tronçon de fixation 38 comporte un téton d'extrémité avant 46 qui est apte à guider le positionnement de l'écrou de serrage 36 coaxialement à la tige 30 pour faciliter l'opération de fixation du bloc de feu 14 sur l'élément de carrosserie 10.

L'écrou de serrage 36 comporte une face d'extrémité arrière qui est destinée à être serrée contre la face interne 25 de l'élément de carrosserie 10. La face d'extrémité arrière de l'écrou de serrage 36 comporte un lamage 47 qui est destiné à loger la portion du tronçon de positionnement 40 qui est en saillie par rapport à la face interne 25 de l'élément de carrosserie 10.

Comme représenté à la figure 4, l'extrémité arrière 32 de la tige 30 comporte un pied tronconique 48 qui est agencé axialement en arrière de la collerette 44 et qui est convergeant vers l'avant de manière que le diamètre du sommet du pied 48 soit inférieur au diamètre de la collerette 44.

Le pied 48 est fixé dans l'embase de fixation 50 qui a une forme cylindrique coaxiale à la tige 30. L'embase de fixation 50 comporte une face d'extrémité avant 54 annulaire qui est coplanaire avec la face avant de la collerette 44 et qui entoure radialement la collerette 44. L'embase de fixation 50 comporte un tronçon d'extrémité avant 52 qui est délimité vers l'arrière par une face d'épaulement annulaire 56 qui s'étend en regard de la face externe 23 de l'élément de carrosserie 10.

Un joint annulaire d'étanchéité 58 en matériau élastomère est agencé autour du tronçon d'extrémité avant 52 de manière à être comprimé entre la face externe 23 de l'élément de carrosserie 10 et la face d'épaulement annulaire 56 de l'embase de fixation 50 lorsque le bloc de feu 14 est fixé à l'élément de carrosserie 10. A cet effet, l'épaisseur axiale du joint d'étanchéité 58 au repos est supérieure à la longueur axiale du tronçon d'extrémité avant 52 de l'embase de fixation 50.

L'embase de fixation 50 comporte aussi une face d'extrémité arrière 60 qui est fixée contre la face de support 26 de l'entretoise 24 associée, par exemple par soudage ou par collage.

Dans l'exemple illustré aux figures 2 à 4, la tige 30 est réalisée en un matériau métallique afin que le filetage du tronçon de fixation 38 soit suffisamment résistant pour supporter les contraintes de serrage de l'écrou de serrage 36 contre l'élément de carrosserie 10 lors de l'opération de fixation.

L'embase de fixation 50 est ici réalisée en un matériau plastique, par exemple par surmoulage autour du pied 48 de la tige 30. La forme tronconique du pied 48 permet alors une fixation solide de l'embase de fixation 50 sur la tige 30.

On comprendra bien entendu que la tige 30 et l'embase de fixation 50 peuvent être réalisés en d'autres matériaux ayant des propriétés mécaniques adaptées.

Lors de l'opération de positionnement du bloc de feu 14 sur l'élément de carrosserie 10, les trois tiges 30 sont insérées simultanément selon une direction axiale d'arrière vers l'avant à l'intérieur des orifices de référence 35 associés de l'élément de carrosserie 10.

Le diamètre du tronçon de fixation 38 de chaque tige 30 étant très inférieur à celui de l'orifice de référence 35, la tige 30 peut coulisser axialement sans que le filetage ne s'accroche aux arêtes de l'orifice de référence 35.

Puis, la face tronconique 42 pénètre dans l'orifice de référence 35 de façon à former une rampe qui glisse sur l'arête de l'orifice de référence 35 pour assister l'insertion du tronçon de positionnement 40 à l'intérieur de l'orifice de référence 35. Le diamètre du tronçon de positionnement 40 est en effet inférieur mais très voisin du diamètre de l'orifice de référence 35 de manière que le positionnement du bloc de feu 14 sur l'élément de carrosserie 10 soit très précis.

Le tronçon de positionnement 40 ayant une paroi tronconique lisse, il glisse à l'intérieur de l'orifice de référence 35 jusqu'à ce que le joint d'étanchéité 58 soit en butée axiale contre la face externe 23 de l'élément de carrosserie 10. La forme tronconique du tronçon de positionnement 40 permet de faciliter son insertion à l'intérieur de l'orifice de référence 35. En effet, la section radiale de l'extrémité avant du tronçon de positionnement 40 est reçue avec jeu radial à l'intérieur de l'orifice de référence 35. Ce jeu radial diminue lorsque le tronçon de positionnement 40 coulisse axialement vers l'avant à l'intérieur de l'orifice de référence 35.

Une portion avant du tronçon de positionnement 40 fait alors saillie axialement vers l'avant par rapport à la face interne 25 de l'élément de carrosserie 10.

Le bloc de feu 14 est alors en position pour être fixé sur l'élément de carrosserie 10. Les deux tiges 30 représentées en bas à la figure 2 sont ici destinées à positionner le bloc de feu transversalement par rapport à l'élément de carrosserie 10, tandis que la troisième tige 30 représentée en haut à la figure 2 est destinée à positionner le bloc de feu 14 verticalement par rapport à l'élément de carrosserie 10. A cet effet, les deux tiges inférieures 30 sont reçues avec un jeu vertical dans les orifices de référence 35 associés, tandis que la tige supérieure 30 est reçue avec un jeu transversal dans l'orifice de référence 35 associé.

Comme représenté à la figure 4, l'écrou de serrage 36 est ensuite vissé autour du tronçon de fixation 38 de la tige 30 jusqu'à ce que sa face d'extrémité arrière soit en contact avec la face interne 25 de l'élément de carrosserie 10. Le tronçon de positionnement 40 est alors logé dans le lamage 47.

L'écrou de serrage 36 est ensuite serré contre la face interne 25 de l'élément 10 de manière que, par réaction, la tige 30 soit tirée axialement vers l'avant jusqu'à ce que la face avant de la collerette 44 soit en butée contre la face externe 23 de l'élément de carrosserie 10. Le joint d'étanchéité 58 est alors déformé de manière à être comprimé axialement entre la face externe 23 de l'élément de carrosserie 10 et la face d'épaulement 56 de l'embase de fixation 50 de la tige 28.

Les moyens de positionnement et de fixation 28 réalisés selon les enseignements de l'invention permettent ainsi de réaliser les fonctions de positionnement et de fixation grâce à une tige unique 30.

De plus, l'élément de carrosserie 10 comporte ainsi seulement trois orifices de référence 35 qui ont aussi une fonction d'orifice de fixation, au lieu de six orifices, c'est-à-dire trois orifices de références et trois orifices de fixation. Ainsi, un unique orifice de référence 35 permet le positionnement et la fixation du bloc de feu 14 sur l'élément de carrosserie 10.

En outre, les trois joints d'étanchéité 58 sont comprimés de la même manière lors du serrage des écrous 36. Ainsi, le bloc de feu n'est pas "voilé" ou déformé puisque les joints 58 sont tous maintenus comprimés de la même manière.

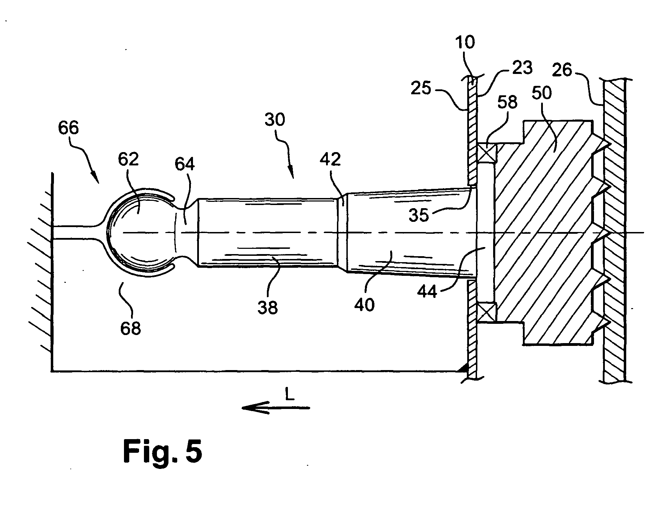

Selon un deuxième mode de réalisation de l'invention qui est représenté à la figure 5, le tronçon de fixation 38 de la tige 30 ne comporte pas de filetage, ni de téton. Le tronçon de fixation 38 comporte ici une tête 62 d'extrémité avant sphérique qui est reliée à la tige 30 par un col 64 plus étroit.

Le diamètre de la tête sphérique 62 est inférieur à celui du tronçon de positionnement 40 de manière que la tête 62 puisse être insérée facilement dans l'orifice de référence 35 associé de l'élément de carrosserie 10.

La tête 62 est destinée à être emboîtée élastiquement dans un logement 66 de forme complémentaire par coulissement axial vers l'avant afin de fixer le bloc de feu 14 sur l'élément de carrosserie 10. Le logement 66 est solidaire de l'élément de carrosserie 10.

Comme représenté à la figure 5, le logement 66 est ici formé par une "tulipe" dont les pétales 68 courbés s'étendent en corolle axialement vers l'arrière en délimitant radialement le logement sphérique 66. Les pétales 68 sont réalisés en un matériau déformable élastiquement tel que du plastique.

La tige 30 est ici réalisée en un matériau plastique, et elle est réalisée venue de matière avec l'embase de fixation 50.

Lors de l'opération de positionnement du bloc de feu 14 sur l'élément de carrosserie 10, la tige 30 est insérée axialement, tête 62 vers l'avant, à l'intérieur de l'orifice de référence 35 associé. Puis la face d'épaulement tronconique 42 guide le tronçon de positionnement 40 l'intérieur de l'orifice de référence 35.

Le mouvement de coulissement axial continu jusqu'à ce que le joint d'étanchéité 58 soit en butée contre la face externe 23 de l'élément de carrosserie 10. La tête 62 est alors partiellement engagée dans le logement 66, c'est-à-dire que les pétales 68 sont écartés radialement de manière à laisser passer la tête 62.

Puis, un effort axial d'arrière en avant est appliqué au bloc de feu 14 de manière à comprimer le joint d'étanchéité 58, jusqu'à ce que la collerette 44 soit en butée contre la face externe 23 de l'élément de carrosserie 10.

La tête 66 est alors entièrement emboîtée dans le logement 66 et les pétales 68 sont revenus dans leur position initiale en enveloppant la tête 62 de manière à bloquer le coulissement axial vers l'arrière du bloc de feu 14 par rapport à l'élément de carrosserie 10.

## Revendications

1. Bloc de feu (14), notamment de véhicule automobile (12), qui est destiné à être fermé de manière étanche par la face externe (23) d'un élément de carrosserie (10), et qui comporte :
- au moins un pion axial (40) de positionnement sur l'élément de carrosserie (10) qui est porté par une face de support (26) du bloc de feu (14) et qui est destiné à être reçu axialement dans un orifice de référence (35) de l'élément de carrosserie (10) ;
- au moins une tige axiale (30) qui comporte un tronçon d'extrémité libre de fixation (38) sur l'élément de carrosserie (10), qui est portée par la face de support (26) du bloc de feu (14), et qui est destinée être reçue axialement dans un orifice de fixation (35) de l'élément de carrosserie (10) ;
- au moins un joint annulaire (58) d'étanchéité qui est agencé de manière à être comprimé entre la face externe (23) de l'élément de carrosserie (10) et une face (56) en vis-à-vis du bloc de feu (14), en entourant la tige (30) et le pion de positionnement (40),
le pion de positionnement (40) étant interposé coaxialement entre le tronçon de fixation (38) et la face de support (26) de manière à former une tige unique (30) comportant un tronçon d'extrémité libre de fixation (38) et un tronçon intermédiaire de positionnement (40) qui est destinée à être reçue dans l'orifice de référence (35) de l'élément de carrosserie (10) formant aussi orifice de fixation, le tronçon intermédiaire de positionnement (40) ayant une forme globalement cylindrique, légèrement tronconique convergeant vers le tronçon de fixation (38) et un diamètre supérieur à celui du tronçon de fixation (38), permettant ainsi, lorsque le diamètre dudit orifice de référence (35) est supérieur mais très voisin du diamètre du tronçon de positionnement (40), un positionnement très précis du bloc de feu (14), la tige (30) comportant une embase (50) de fixation sur la face de support (26) du bloc de feu (14), l'embase (50) comportant une face radiale annulaire (56) coaxiale sur laquelle est fixé ledit joint d'étanchéité (58), **caractérisé en ce que** l'embase de fixation (50) est soudée sur la face de support (26) du bloc de feu (14).

2. Bloc de feu (14) selon la revendication précédente, **caractérisé en ce que** le tronçon de fixation (38) et le tronçon de positionnement (40) sont réalisés venus de matière en une seule pièce.

3. Bloc de feu (14) selon l'une quelconque des revendications précédentes, **caractérisé en ce que** le tronçon de fixation (38) comporte un filetage qui est destiné à recevoir un écrou de serrage (36) contre une face interne (25) de l'élément de carrosserie (10).

4. Bloc de feu (14) selon l'une quelconque des revendications 1 ou 2, **caractérisé en ce que** l'extrémité libre du tronçon de fixation (38) comporte une tête de fixation (62) qui est destinée à être emboîtée élastiquement dans un logement (66) de forme complémentaire porté par l'élément de carrosserie (10).

5. Bloc de feu (14) selon l'une quelconque des revendications précédentes, **caractérisé en ce que** la paroi du tronçon de positionnement (40) est lisse.

6. Bloc de feu (14) selon l'une quelconque des revendications précédentes, **caractérisé en ce que** la tige (30) comporte une collerette (44) qui s'étend radialement depuis la base du tronçon de positionnement (40) qui est apte à venir en butée axiale contre la face externe (23) de l'élément de carrosserie (10) autour de l'orifice de référence (35).

7. Bloc de feu (14) selon revendication l'une quelconque des revendications précédentes, **caractérisé en ce que** l'embase de fixation (50) sur la face de support (26) le bloc de feu (14) est réalisée en un matériau plastique.

8. Bloc de feu (14) selon l'une quelconque des revendications précédentes, **caractérisé en ce que** la tige (30) est réalisée en un matériau métallique, et **en ce que** l'embase de fixation (50) est réalisée par surmoulage sur la tige (30).

9. Bloc de feu (14) selon l'une quelconque des revendications 1 à 7, **caractérisé en ce que** la tige (30) est réalisé en un matériau plastique qui est formé venu de matière avec l'embase de fixation (50).

10. Bloc de feu (14) selon l'une quelconque des revendications précédentes, **caractérisé en ce que** le bloc de feu (14) comporte trois tiges (30) comportant un tronçon de fixation (38) et un tronçon de positionnement (40), un joint d'étanchéité (58) étant associé à chaque tige (30).

11. Véhicule comprenant un bloc de feu (14) selon l'une quelconque des revendications précédentes, ledit bloc de feu étant fixé à un élément de carrosserie (10) dudit véhicule, ledit élément de carrosserie du véhicule présentant un orifice de référence (35) recevant la tige unique (30) comportant ledit tronçon d'extrémité libre de fixation (38) et ledit tronçon intermédiaire de positionnement (40), le tronçon intermédiaire de positionnement (40) ayant une forme globalement cylindrique, légèrement tronconique convergeant vers le tronçon de fixation (38) et un diamètre supérieur à celui du tronçon de fixation (38), la section radiale de l'extrémité avant du tronçon de positionnement (40) étant reçue avec un jeu radial à l'intérieur de l'orifice de référence (35), ce jeu radial diminuant lorsque le tronçon de positionnement (40) coulisse axialement vers l'avant à l'intérieur de l'orifice de référence (35).

12. Véhicule selon la revendication 11, dans lequel le diamètre du tronçon de positionnement 40 est inférieur mais très voisin au diamètre de l'orifice de référence (35) de manière que le positionnement du bloc de feu (14) sur l'élément de carrosserie (10) soit très précis

13. Véhicule selon la revendication 11 ou 12, dans lequel la longueur axiale du tronçon de positionnement (40) est supérieure à l'épaisseur de l'élément de carrosserie (10).

14. Véhicule selon la revendication précédente, dans lequel le tronçon de fixation (38) comporte un filetage recevant un écrou de serrage (36) contre une face interne (25) de l'élément de carrosserie (10), l'écrou de serrage (36) comportant un lamage (47) qui est destiné à loger la portion du tronçon de positionnement (40) qui fait saillie par rapport à la face interne (25) de l'élément carrosserie (10).

## Claims

1. Lighting unit (14), in particular for a motor vehicle (12), which is designed to be closed in a sealed manner by the outer surface (23) of a bodywork element (10), and which comprises:
- at least one axial pin (40) for positioning on the bodywork element (10), which is supported by a support surface (26) of the lighting unit (14), and is designed to be received axially in a reference orifice (35) in the bodywork element (10);
- at least one axial rod (30), which comprises a free end section (38) for securing on the bodywork element (10), which rod is supported by the support surface (26) of the lighting unit (14), and is designed to be received axially in a securing orifice (35) in the bodywork element (10);
- at least one annular seal (58) which is arranged such as to be compressed between the outer surface (23) of the bodywork element (10) and a surface (56) opposite of the lighting unit (14), whilst surrounding the rod (30) and the positioning pin (40);
the positioning pin (40) being interposed coaxially between the securing section (38) and the support surface (26), such as to form a single rod (30) comprising a free end securing section (38) and an intermediate positioning section (40) which is designed to be received in the reference orifice (35) in the bodywork element (10), which also forms a securing orifice, the intermediate positioning section (40) having a globally cylindrical, slightly frusto-conical form which converges towards the securing section (38), and a diameter greater than that of the securing section (38), thus making permitting very accurate positioning of the lighting unit (14), when the diameter of the said reference orifice (35) is greater than, but very close to the diameter of the positioning section (40), the rod (30) comprising a base (50) for securing on the support surface (26) of the lighting unit (14), the base (50) comprising a coaxial radial annular surface (56) on which the said seal (58) is secured, **characterised in that** the securing base (50) is welded onto the support surface (26) of the lighting unit (14).

2. Lighting unit (14) according to the preceding claim, **characterised in that** the securing section (38) and the positioning section (40) are produced integrally in a single piece.

3. Lighting unit (14) according to either of the preceding claims, **characterised in that** the securing section (38) comprises a thread which is designed to receive a nut (36) for clamping against an inner surface (25) of the bodywork element (10).

4. Lighting unit (14) according to either of claims 1 or 2, **characterised in that** the free end of the securing section (38) comprises a securing head (62) which is designed to be fitted resiliently in a receptacle (66) with a complementary form which is supported by the bodywork element (10).

5. Lighting unit (14) according to any one of the preceding claims, **characterised in that** the wall of the positioning section (40) is smooth.

6. Lighting unit (14) according to any one of the preceding claims, **characterised in that** the rod (30) comprises a collar (44) which extends radially from the base of the positioning section (40), and can abut axially the outer surface (23) of the bodywork element (10), around the reference orifice (35).

7. Lighting unit (14) according to any one of the preceding claims, **characterised in that** the base (50) for securing on the support surface (26) of the lighting unit (14) is made of a plastic material.

8. Lighting unit (14) according to any one of the preceding claims, **characterised in that** the rod (30) is made of a metal material, and **in that** the securing base (50) is made by over-moulding onto the rod (30).

9. Lighting unit (14) according to any one of claims 1 to 7, **characterised in that** the rod (30) is made of a plastic material which is formed integrally with the securing base (50).

10. Lighting unit (14) according to any one of the preceding claims, **characterised in that** the lighting unit (14) comprises three rods (30) comprising a securing section (38) and a positioning section (40), a seal (58) being associated with each rod (30).

11. Vehicle comprising a lighting unit (14) according to any one of the preceding claims, the said lighting unit being secured to a bodywork element (10) of the said vehicle, the said bodywork element of the vehicle having a reference orifice (35) which receives the single rod (30) comprising the said free end securing section (38) and the said intermediate positioning section (40), the intermediate positioning section (40) having a globally cylindrical, slightly frusto-conical form which converges towards the securing section (38), and a diameter greater than that of the securing section (38), the radial cross-section of the front end of the positioning section (40) being received with radial play inside the reference orifice (35), this radial play decreasing when the positioning section (40) slides axially forwards inside the reference orifice (35).

12. Vehicle according to claim 11, wherein the diameter of the positioning section 40 is smaller than, but very close to the diameter of the reference orifice (35), such that the positioning of the lighting unit (14) on the bodywork element (10) is very accurate.

13. Vehicle according to claim 11 or 12, wherein the axial length of the positioning section (40) is greater than the thickness of the bodywork element (10).

14. Vehicle according to the preceding claim, wherein the securing section (38) comprises a thread which receives a nut (36) for clamping against an inner surface (25) of the bodywork element (10), the clamping nut (36) comprising a countersink (47) which is designed to accommodate the portion of the positioning section (40) which projects relative to the inner surface (25) of the bodywork element (10).

## Patentansprüche

1. Leuchteneinheit (14), insbesondere für ein Kraftfahrzeug (12), die dazu bestimmt ist, durch die Außenseite (23) eines Karosserieteils (10) in dichter Weise verschlossen zu werden, und die umfasst:
- wenigstens einen axialen Stift (40) zur Positionierung auf dem Karosserieteil (10), der von einer Haltefläche (26) der Leuchteneinheit (14) gehalten und der dazu bestimmt ist, in einer Bezugsöffnung (35) des Karosserieteils (10) axial aufgenommen zu werden;
- wenigstens eine axiale Stange (30) mit einem freien Endstück (38) zur Befestigung auf dem Karosserieteil (10), die von der Haltefläche (26) der Leuchteneinheit (14) gehalten und dazu bestimmt ist, in einer Befestigungsöffnung (35) des Karosserieteils (10) axial aufgenommen zu werden;
- wenigstens eine ringförmige Dichtung (58), die so angeordnet ist, dass sie zwischen der Außenseite (23) des Karosserieteils (10) und einer der Leuchteneinheit (14) gegenüberliegenden Fläche (56) komprimiert wird und dabei die Stange (30) und den Positionierungsstift (40) umgibt,
wobei der Positionierungsstift (40) zwischen das Befestigungsstück (38) und die Haltefläche (26) koaxial so eingefügt ist, dass er eine einzige Stange (30) mit einem freien Befestigungsendstück (38) und einem Positionierungsmittelstück (40) bildet, die dazu bestimmt ist, in der Bezugsöffnung (35) des Karosserieteils (10), das auch die Befestigungsöffnung bildet, aufgenommen zu werden, wobei das Positionierungsmittelstück (40) eine allgemein zylindrische, leicht kegelstumpfartig in Richtung des Befestigungsstücks (38) konvergierende Form und einen Durchmesser hat, der größer ist als der des Befestigungsstücks (38), wodurch, da der Durchmesser der Bezugsöffnung (35) größer ist als der Durchmesser des Positionierungsstücks (40), jedoch sehr nahe bei diesem liegt, eine sehr genaue Positionierung der Leuchteneinheit (14) ermöglicht ist, wobei die Stange (30) einen Sockel (50) zur Befestigung auf der Haltefläche (26) der Leuchteneinheit (14) aufweist, wobei der Sockel (50) eine koaxiale, ringförmige radiale Fläche (56) aufweist, an der die Dichtung (58) befestigt ist,
**dadurch gekennzeichnet, dass** der Befestigungssockel (50) auf die Haltefläche (26) der Leuchteneinheit (14) geschweißt ist.

2. Leuchteneinheit (14) nach dem vorhergehenden Anspruch,
**dadurch gekennzeichnet, dass** das Befestigungsstück (38) und das Positionierungsstück (40) einstückig ausgebildet sind.

3. Leuchteneinheit (14) nach einem der vorhergehenden Ansprüche,
**dadurch gekennzeichnet, dass** das Befestigungsstück (38) ein Gewinde aufweist, das zur Aufnahme einer Klemmmutter (36) gegen eine Innenseite (25) des Karosserieteils (10) bestimmt ist.

4. Leuchteneinheit (14) nach einem der Ansprüche 1 oder 2,
**dadurch gekennzeichnet, dass** das freie Ende des Befestigungsstücks (38) einen Befestigungskopf (62) aufweist, der dazu bestimmt ist, elastisch in eine komplementär geformte Aufnahme (66) gesteckt zu werden, mit der das Karosserieteil (10) versehen ist.

5. Leuchteneinheit (14) nach einem der vorhergehenden Ansprüche,
**dadurch gekennzeichnet, dass** die Wand des Positionierungsstücks (40) glatt ist.

6. Leuchteneinheit (14) nach einem der vorhergehenden Ansprüche,
**dadurch gekennzeichnet, dass** die Stange (30) einen sich radial von der Basis des Positionierungsstücks (40) erstreckenden Rand (44) aufweist, der gegen die Außenseite (23) des Karosserieteils (10) um die Bezugsöffnung (35) herum in axiale Anlage zu gelangen vermag.

7. Leuchteneinheit (14) nach einem der vorhergehenden Ansprüche,
**dadurch gekennzeichnet, dass** der Sockel (50) zur Befestigung auf der Haltefläche (26) der Leuchteneinheit (14) aus einem Kunststoff gefertigt ist.

8. Leuchteneinheit (14) nach einem der vorhergehenden Ansprüche,
**dadurch gekennzeichnet, dass** die Stange (30) aus einem Metall-Werkstoff gefertigt ist, und dass der Befestigungssockel (50) durch Aufspritzen auf die Stange (30) gefertigt ist.

9. Leuchteneinheit (14) nach einem der Ansprüche 1 bis 7,
**dadurch gekennzeichnet, dass** die Stange (30) aus einem Kunststoff gefertigt ist, der materialeinheitlich mit dem Befestigungssockel (50) ausgeführt ist.

10. Leuchteneinheit (14) nach einem der vorhergehenden Ansprüche,
**dadurch gekennzeichnet, dass** die Leuchteneinheit (14) drei Stangen (30) mit einem Befestigungsstück (38) und einem Positionierungsstück (40) umfasst, wobei jeder Stange (30) eine Dichtung (58) zugeordnet ist.

11. Fahrzeug mit einer Leuchteneinheit (14) nach einem der vorhergehenden Ansprüche, wobei die Leuchteneinheit an einem Karosserieteil (10) des Fahrzeugs befestigt ist, wobei das Karosserieteil des Fahrzeugs eine Bezugsöffnung (35) aufweist, welche die einzige Stange (30) mit dem freien Befestigungsendstück (38) und dem Positionierungsmittelstück (40) aufnimmt, wobei das Positionierungsmittelstück (40) eine allgemein zylindrische, leicht kegelstumpfartig in Richtung des Befestigungsstücks (38) konvergierende Form und einen Durchmesser hat, der größer ist als der des Befestigungsstücks (38), wobei der radiale Abschnitt des vorderen Endes des Positionierungsstücks (40) mit radialem Spiel innen in der Bezugsöffnung (35) aufgenommen ist, wobei das radiale Spiel abnimmt, wenn das Positionierungsstück (40) innen in der Bezugsöffnung (35) axial nach vorne gleitet.

12. Fahrzeug nach Anspruch 11,
bei dem der Durchmesser des Positionierungsstücks (40) kleiner ist als der Durchmesser der Bezugsöffnung (35), jedoch sehr nahe bei diesem liegt, so dass die Positionierung der Leuchteneinheit (14) auf dem Karosserieteil (10) sehr genau ist.

13. Fahrzeug nach Anspruch 11 oder 12,
bei dem die axiale Länge des Positionierungsstücks (40) größer ist als die Dicke des Karosserieteils (10).

14. Fahrzeug nach dem vorhergehenden Anspruch,
bei dem das Befestigungsstück (38) ein Gewinde aufweist, das eine Klemmmutter (36) gegen eine Innenseite (25) des Karosserieteils (10) aufnimmt, wobei die Klemmmutter (36) eine Vertiefung (47) aufweist, die dazu bestimmt ist, den Teil des Positionierungsstücks (40) aufzunehmen, der bezüglich der Innenseite (25) des Karosserieteils (10) vorsteht.
